# EUROPEAN PATENT SPECIFICATION

(11) **EP 2 999 659 B1**
(45) Date of publication and mention of the grant of the patent: **31.07.2019**
(21) Application number: 14801620.7
(22) Date of filing: 23.05.2014
(51) Int. Cl.: B67D 3/00, B67D 1/08, G07F 11/00, B67D 1/00, G07F 13/06, G06Q 20/28, G06Q 20/32, G06Q 50/12, G07F 13/10, G07F 13/02

(54) **A BEVERAGE SERVICE SYSTEM**
GETRÄNKEAUSGABESYSTEM
SYSTÈME DE FOURNITURE DE BOISSON

(30) Priority: 23.05.2013 ZA 201303747
(43) Date of publication of application: 30.03.2016
(73) Proprietor: Invisionary Holdings, Port Louis (MU)
(72) Inventor: DE BERG HEWETT, Roland William, 7945 Cape Town (ZA)
(74) Representative: Jones, Cerian
(86) International application number: PCT/IB2014/061663
(87) International publication number: WO 2014/188389

(56) References cited:
- WO-A1-2009/032946
- WO-A1-2013/040169
- KR-A- 20120 031 752
- US-A1- 2005 087 255
- US-A1- 2007 215 239
- US-A1- 2008 223 478
- US-A1- 2010 043 911
- US-A1- 2010 125 362
- US-A1- 2010 200 110
- US-A1- 2011 049 180
- US-A1- 2011 114 647
- US-A1- 2011 168 775
- US-A1- 2011 298 583
- US-B1- 7 617 850
- US-B1- 8 245 739

## Description

### FIELD OF THE INVENTION

The invention relates to a system for service of a beverage and particularly for service of beverage from a keg where there is a significant demand from a large number of consumers. The application of the invention is particularly relevant to events hosted at sport stadiums or in similar environments where large crowds have gathered for a hosted event.

### BACKGROUND TO THE INVENTION

The prior art includes many beverage dispensing systems wherein value is placed in a tag mounted cup by virtue of loading credit onto tag (which is mounted to the cup). The prior art documents described herein generally have the aforementioned configuration. This is for example seen in US 2007/0215239. Similarly, in the prior art value may be placed in a bangle/bracelet/card which carries the tag, as disclosed in US 2011/0049180 and US 8,245,739.

US 2010/0200110 describes a beverage dispensing system including a cup with a wireless transceiver. US 2011/298583 discloses methods that include the actions of receiving authorization data specifying that a beverage dispensing node is authorized to be activated before activating the dispensing of a beverage from a dispenser, wherein for example a user has an RFID card including authorization data such as information that he/she is of legal age to purchase alcohol.

US 2010/125362 provides a token-based system providing self-service vending of snacks or beverages, wherein the token may be a handheld or wearable object providing the access data, such as with an RFID tag on a bracelet or pin or with a barcode or magnetic stripe on a card or room key.

WO 2013/040169 describes a fuel dispensing environment utilizing mobile payment, wherein an RFID tag is used as a location identifier. US 2010/043911 describes an apparatus for dispensing a beverage together with a drinking vessel, wherein the drinking vessel fills from its base. US 2008/223478 discloses a method and apparatus are disclosed for filling specially-designed beverage containers from the bottom through a one-way port. WO 2009/032946 discloses a device and method for operating an interactive dispenser wherein a certain embodiment includes a cup having an RFID tag. KR2012 0031752 provides for a beverage vending machine system composed of a smart cup, a beverage vending machine, and a payment server. The smart cup forms an information tag in which information and user cognition information are recorded, again placing value on the tag. US 2005/087255 describes a radio frequency device in drinkware, such as a cup, mug or straw, to record data or initiate a sequence of behaviour. Again value is placed in the RF tag. US 2011/114647 discloses a thermal beverage container providing an RFID tag anchored between dual walls of the container to be hermetically protected while scannable, thereby permitting the container to be used as a gift card to promote the use of reusable containers rather than disposable cups in the purchase of beverages. US 2011/114647 details an automated beverage dispensing system wherein cups are RFID tagged and value is placed onto the RFID tag. US 7,617,580 relates to a beverage dispensing system including cups with RFID tags. Value is again placed on to the RFID tags.

In the field of the present invention the supply of a keg drinking beverage, specifically beer offered on tap or carbonated soft drinks, which usually constitute the largest beverage sales at such an event, offers many challenges.

Service counters with operators manning on tap drinks dispensers are the norm. The barmen take orders, pour the drinks and collect the relevant payment, which is usually or often in cash and requires return of the correct change.

What seems to be a simple transaction is relatively time consuming. The steps must nonetheless be carried out and there is little room to speed up each customer interaction. The result is long queues and time lost to consumers waiting in them. This often means missing out on part of the event being attended.

The problem is aggravated where spectator events are structured around breaks. These periods see an influx in queuing at the drinks counters.

### OBJECT OF THE INVENTION

It is an object of the invention to provide a system which at least partially mitigates the delays in serving a beverage to a number of people and more specifically where the beverage is served from a keg at such largely attended events.

### SUMMARY OF THE INVENTION

According to this invention there is provided a system for the service of a beverage to consumers as defined in appended claim 1.

The request to redeem a cup credit will be effected by the transfer of data to the at least one reader from the cup mounted tag and the credit transfer instruction will be effected by the transfer of data from the NFC device which transfer is communicated to the at least one reader either through the cup mounted tag, which stores the data received from NFC device as will be expanded on below.

The invention further provides for the system to be for the mass service of a beverage to consumers in a crowd attendant at a large-scale event; for the dispensers to be keg beverage dispensers; and for the event to be hosted at a sports stadium.

The claimed invention comprises the step of linking an identification tag of at least one cup to a particular user profile before an authorisation interaction can take place with respect to any particular cup mounted tag. Optionally, a plurality of cups having distinct tags are linkable to a single user profile.

In a first aspect of the invention the authorisation interaction takes place through series communications from the NFC device through a cup mounted tag and to the credit receipt circuit with:
- a first interaction between the NFC device and the cup mounted tag which provides the credit transfer instruction; and
- a second interaction between the cup mounted tag and the credit receipt reader which provides the request to redeem a cup credit.

The first aspect of the invention further provides for the cup mounted tag to include an NFC readable circuit, preferably an NFC chip and for the first interaction to take place by tapping the cup with the NFC device to transfer at least one credit to the NFC chip of the cup.

In another unclaimed example the authorisation interaction takes place through parallel communications and for the at least one credit receipt reader to comprise a first reader and a second reader, with:
- a first communication provided between the cup mounted tag and the first reader, which provides the request to redeem a cup credit; and
- a second communication provided between the NFC device and the second reader, which provides the credit transfer instruction.

Further features of the invention provide for the at least one cup filling station of the beverage dispensing machine to include as the first reader, an electronic tag reader and as a second reader, an NFC device interrogator both connected to the computer processor via the credit receipt circuit, with the NFC device which represents a user profile and a cup mounted tag linked to the user profile providing a combination of predefined parameters unique to that user profile and to be matched through the credit receipt circuit of the beverage dispensing machine.

Further it could be conceivable to provide for there to be a first kiosk for dispensing of cups, preferably automated dispensing of cups, to consumers; and a second kiosk for issuing a token to a consumer which represents a new user profile.

A further feature of the invention provides for the token to include a unique user profile identifier and for a consumer to use the identifier to set up a user profile by selecting a user name and a password.

A further feature of the invention provides for the payment facility to be provided online and accessed through the user profile.

A further conceivable feature provides for the first and second kiosks to be combined and incorporate the facility to receive payment from the consumer with an automated cup and/or token dispenser at a single station.

A further feature of the invention provides for the beverage dispensing machine to include a plurality of filling stations each configured to receive a cup and enabled to fill several cups independently.

A further feature of the invention provides for the cup to have a stackable handle comprising an internal socket extending from an operatively upper end and an external spigot from an operatively lower end provided as a complementary fit to a handle socket of another cup, with the tag secured to an end wall at or adjacent the operatively lower end of the handle.

Further features of the invention provide for the filling station to include an automated retractable filling nozzle for bottom filling of cups; for the nozzles to descend into the cups for filling; or for the cups to include bottom filling valves and for the nozzles to penetrate the bottom of the cups through the filling valves.

A further feature of the invention provides each filling station of the beverage dispensing machine to include a dock configured to receive a bottom end of a cup and for the system to effect automated filling of a docked cup.

Further features of the invention provide for the cups to be reusable; for the cups to be of limited reuse; and for the processor of the beverage dispenser to count uses of individual cups identified by their tags and provide a signal on presentation of a cup after a predetermined number of uses indicating replacement is required.

The invention further provides for the processor to withhold filling of a docked cup after a predetermined number of uses, to issue a signal for a beverage dispenser operator to remove the cup from the dock and insert a replacement cup with a new tag; and for the processor to update the user profile by automatically linking a new tag of the replacement cup to the user profile and for the processor to deactivate the tag of the replaced cup from the user profile.

In accordance with one aspect of the invention the NFC device is provided as a card with an NFC chip; and the NFC card is issued by the second kiosk with the token.

In accordance with another aspect of the invention the consumer NFC device is an NFC enabled mobile telephone.

Further features of the invention provide for a consumer mobile communication device to provide an interface to access the user profile and for the interface to provide beverage ordering options for a predefined number of cup units; for ordering information relating to the number of cup units required for refill, as selected by option on the interface, to be communicated to the processor for filling of docked cups having tags linked to the user profile; and for the order to be processed by the system once the relevant cups are docked and the request to redeem a cup credit is received and the authorisation interaction recognised.

A further feature of the invention provides for the user profile interface to provide the facility to receive a payment from the consumer and load that payment against the user profile.

Further it could be conceived for each cup filling station of the beverage dispensing machine to include a display panel, for the display panels to be linked through the processor to a plurality of first credit receipt readers and for the display panels to indicate which filling stations have cups linked to a user profile at a particular second credit receipt reader; and for second credit receipt readers to be provided on or adjacent a countertop for a queues of consumers to access and the display panels arranged for beverage dispensing machine operators behind the counter to match filled cups for return to customers at the respective second credit receipt readers.

### BRIEF DESCRIPTION OF THE DRAWINGS

These and other features of the invention will become more apparent from the following description of embodiments of the invention made, by way of example only, with reference to the accompanying drawings, in which:

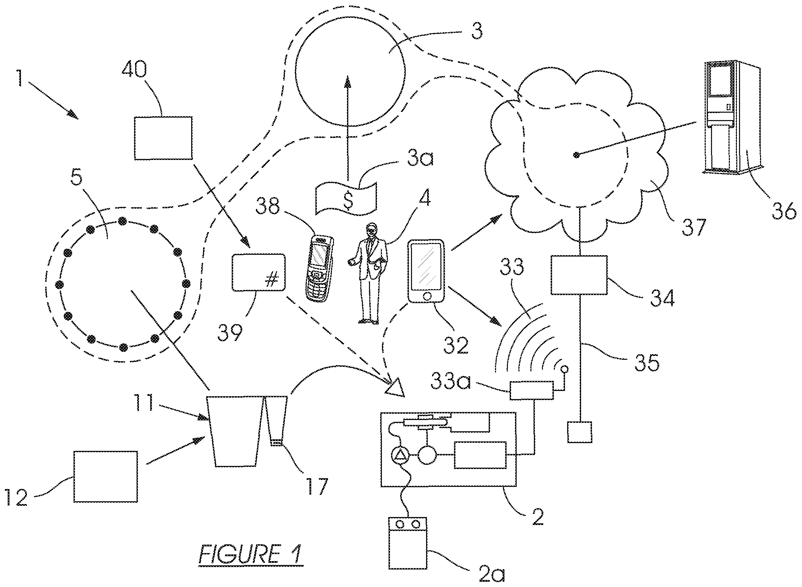

- Figure 1: shows a schematic overview of a system in accordance with the invention;

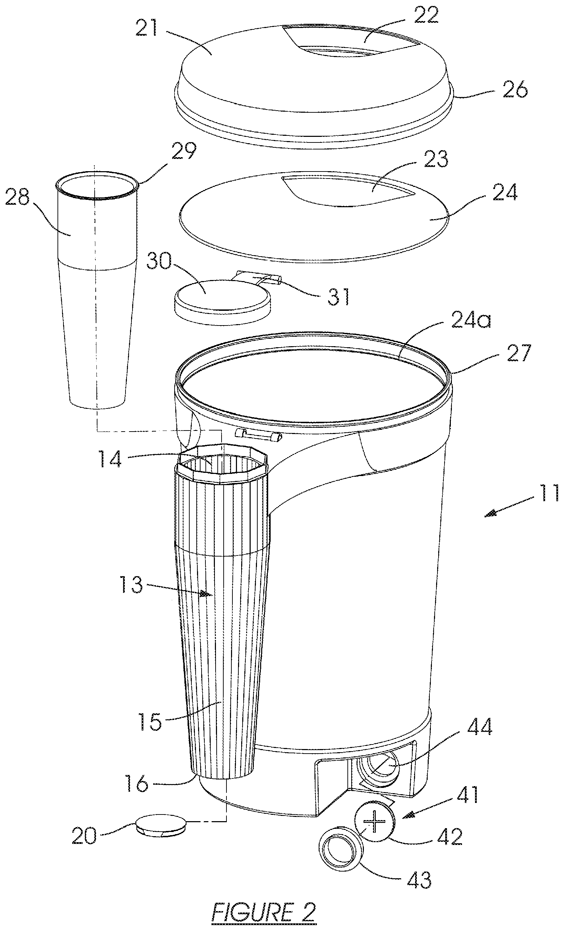

- Figure 2: shows an exploded perspective view of a cup for use with the system of

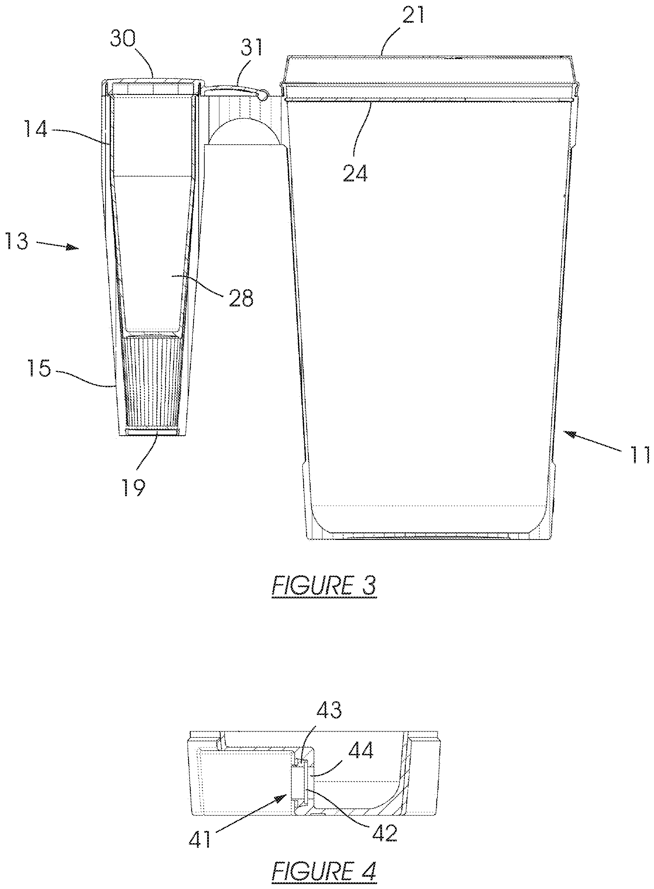

- Figure 3: shows a side cross-section of the cup;
- Figure 4: shows an enlarged cross-sectional view of a bottom filling valve of the cup;
- Figure 5: shows one embodiment of an authorisation interaction and profile credit receipt circuit; and
- Figure 6: shows an alternative to Figure 5.

### DETAILED DESCRIPTION OF THE INVENTION

A system (1) for service of a beverage to consumers is provided. In particular, the system is suited to handle mass service of a beverage to consumers in a crowd attendant at a large-scale event of the kind hosted at a sports stadium. The event could be a music concert or a sports event, for example.

The system (1) includes a beverage dispenser or dispensing machine (2). It is the service of keg beer (2a) at such events which usually involves considerable logistics and still tends to result in significant queuing due to slow processing at the beer counters. The invention is described as being implemented with beer dispensers. The advantages of the invention should become more clearly apparent in the context of beer supply at such events. It will however be appreciated that these advantages will also apply to the service of other beverages (particularly, soft drinks) on tap or from a keg (2a).

The system (1) also includes a facility (3) to receive a payment of funds (3a) from a consumer or user (4). The facility (3) allows the payment to be loaded as a credit for cup units of a beverage, against a user profile (5).

The beverage dispensing machine (2) includes a plurality of cup filling stations (6) - only one of which is shown in the drawings. Each station (6) is provided with a cup filling nozzle (7) having an actuator (8) connected to a computer processor (9). Each filling station (6) also has a dock (10) provided as a complementary seat to receive the bottom of a cup (11).

A first kiosk (12) will be provided at a strategically selected location, somewhere in the vicinity of the beverage dispenser and/or at entrance gates to the venue grounds. This kiosk (12) will conveniently be provided as a vending machine for automated dispensing of the cups (11) to consumers (4).

The cups (11) will be moulded from suitable plastics or biodegradable material with a filling capacity of 500 ml. The cups (11) will also preferably be provided with stackable handles (13). The handles (13) will be formed with an internal socket (14) extending from an operatively upper end and an external spigot (15) from an operatively lower end (16). The spigot (15) is provided as a complementary fit into a handle socket (14) of another cup (11) for staggered or offset stacking to carry a plurality of beverage-filled cups (11) in the known manner.

In accordance with the invention, each cup (11) is fitted with an electronically detectable, unique identification tag (17). The tag (17) will be secured to or against an end wall (18) at the operatively lower end (16) of the cup handle (13). The end wall (18) is preferably spaced inwardly from the free, lower end (16) of the handle (13). This provides a circular recess (19) against the outer, lower side of the end wall (18) into which the tag (17) can be secured. A cap (20) is provided as an interference or clip fit into the end (16) of the handle (13). The cap (20) serves to hold the tag (17) in place within the recess (19).

In the embodiment shown, the cup (11) includes a lid (21). The lid (21) has a opening (22) for drinking when aligned with an opening (23) in a closure disk (24). The lid (21) has a skirt (25) with a groove (26) providing a clip-fit to a radial rib (27) at the rim of the cup (11). The disk (24) fits into a radial groove (24a) on an inner wall of the cup (11) adjacent the rim. The lid (21) can be rotated about the rim of the cup (11).

The socket (14) of the stacking handle (13) can also be used to store a tot or shooter receptacle (28). A radial flange (29) at the top of the receptacle (28) engages on a shouder in the socket (14) to support the receptacle (28). A closure (30) is provided with an interference fit to the mouth of the socket (14). The closure (30) is relasably secured to the cup (11) by a flexible connector (31).

### First embodiment of the invention

More specifically, in accordance with a first embodiment of the invention, the base or end wall (18) of the cup handle (13) is fitted with an identification tag provided as a Near Field Communication (NFC) readable circuit, preferably in the form of an NFC chip (17).

The NFC chip (17) can store information (such as credits and vouchers) that is transferred from a user's NFC enabled mobile telephone (32) linked to a user profile (5).

The beverage dispenser (2) will preferably integrate NFC technology and a wirelessly supported local area network, preferably Wi-Fi (33), for communication with suitably enabled mobile telephones (32) of the users (4). In the case of NFC technology, and this embodiment of the invention, only smart phones (32) that have internal NFC chips can be used for transactions in the manner set out.

The combination of NFC and Wi-Fi based communication enables the automated payment and filling of cups of beer against user profile credits and also provides a basis for providing information and transmission of messages to the user.

The Wi-Fi network (33) will make use of a captive portal (34) for authentication of consumers (4) and can be used to send, amongst others, coupons, vouchers and messages about price specials.

The following hardware components provide an example of what would be required for data processing and connectivity of the system (excluding a credit receipt circuit as will be referred to below, which will include an NFC reader):
- 3 x Wi-Fi access points;
- 1 x Wi-Fi controller;
- 1 x basic processor/server (9) with Wi-Fi application installed;
- 1 x Wi-Fi router (33a); and
- 1 x internet connection (35) (fibre, ADSL or mobile broadband).

These components will be mounted inside a suitable housing, which will be incorporated within or at least connected to the beverage dispenser (2).

A separate database server (36) which manages the changing details and transactions with respect to the user profiles (5) may be provided at a location remote from the stadium. The server (36) will rely on connections via internet (37).

The system (1) will be provided to initiate interaction with a Wi-Fi activated mobile (32) telephone of a consumer (4) upon entry into the Wi-Fi network (33) range. A prompt will be sent to the telephone by the system (1) inviting the consumer to join the network (33).

Once the user (4) accepts the request he/she will be asked to enter their email address, which will be used as a username, and to select and input a user defined password. The user will also be required to enter their mobile telephone number.

The new user (4) will then be directed to a download page to download a mobile application. In this manner, a consumer (4) sets up the user profile (5) on a system database, which is stored on the server (36), to access the service features of the invention. The consumer (4) will thus have an NFC enabled device (the phone (32) or an alternative as referred to in a second embodiment below) linked to the user profile (5).

The mobile application allows users (4) to transfer money (3a)from their bank accounts to an account linked to the user's profile (5) and load credits against the profile (5). This payment facility (3) is connected to an electronic platform operated by the server (35) which manages user profiles and profile credits.

Directions will also be provided to activate a cup mounted NFC chip (17) with a user's NFC enabled mobile phone (32). Once the user (4) has set up a profile (5) and with such a device (32) connected and money (3a) loaded against the profile (5), the mobile phone (32) can be tapped onto the base of a cup's handle (13). This will load the credits from the profile (5) onto the cup mounted NFC chip (17).

The beer dispensing unit (2) is operated by the computer processor (9) which is enabled by suitable software. The processor (9) controls pouring of the beer and also records the volume of beer dispensed by the machine (2). A volumetric valve (7a) is included in the machine (2) to provide measured units of beer per cup.

A beer dispenser (2) in accordance with this embodiment and having, for example, four filling stations (6) will include the following components:
- 4 x volumetric valves (7a);
- 4 x beverage dispensing nozzles (7); and
- 1 x NFC reader (37a).

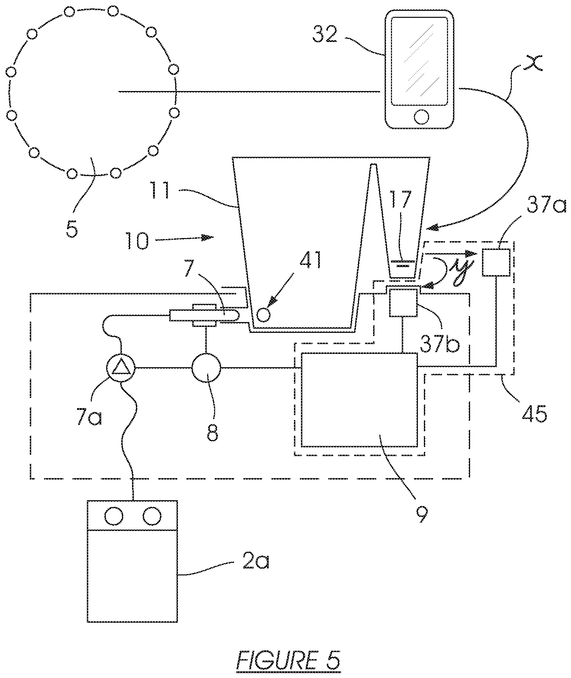

The NFC reader (37a) - see Figure 5 - activates the machine (2) when a cup (11) with NFC chip (17) is tapped onto it or placed within suitable near proximity.

Once this is done the user (4) will be prompted to hand the cup (11) to a bartender who will slot it into place on the pouring section of the beer dispenser (2). With the cup (11) in place, the bartender is prompted to push a pour button, which will then activate the injected nozzle system and the beer will be poured or dispensed into the cup from the bottom up. The prompt may be a simple signal such as a green light.

Alternatively, an NFC reader (37b) - see also Figure 5 - can be provided for each filling station (6) of the beverage dispenser (2). The reader (37b) will be located adjacent a dock (10 for the bottom of a cup (11). When a cup (11) is docked, in the required orientation, the NFC chip (17) in the base of the handle (13) will be supported within the required proximity of the reader (37b). A beer dispenser in accordance with this version could, for example, have eight filling stations (6) which include the following components:
- 8 x volumetric valves (7a);
- 8 x beverage dispensing nozzles (7); and
- 8 x NFC readers (37b).

### Example II

A conceivable alternative provides for users (4) with older mobile telephones (38) that do not have an NFC embedded chip.

As an alternative to using an NFC enabled mobile telephone (32), the user (4) will be provided with an NFC enabled device in the form of a card, wrist band or other device provided with a suitable NFC chip. The device will be an NFC card, indicated by (39).

The NFC card represents a token (39) which will be issued by a second kiosk (40) and may be automatically linked to a relevant profile (5) or associated/connected account, before the user name and password of the profile (5) are set up.

It will be appreciated that, in such a case where an NFC card (39) is used, the user profile (5) can still be accessed and managed through a mobile telephone or other suitable communication or data processing device (38). Payments can equally be made to the payment facility (3) using a mobile phone or other suitable device (38).

In addition to access through service provider internet connectivity (35), a local area network will be set up at the stadium. This may conveniently be provided as the Wi-Fi network (33) made available to all profile holders as already referred to.

Once a consumer (4) has set up a user profile (5), the system (1) provides for the step of linking identification tags (17) of cups (11) to the user profile (5) where such cups (11) were not automatically linked through issue of the token (39) together with cups (11). In this embodiment, the identification tags may be Radio Frequency Identification (RFID) tags (17) and need not store the information relating to profile credits.

The second kiosk (40) is thus provided for issuing of the tokens (39) to consumers. Each token will represent a new user profile (5) and includes a unique user profile identifier.

The identifier may be as simple as a unique account number or code that represents a user profile (5) which is still to be set up or personalised but is already linked to a tag (17) in a particular cup (11). This can be marked on the exterior of the card (39) or readable by a mobile phone (NFC or RFID protocols can be employed depending on the version of the card and a user's mobile phone capabilities).

A consumer (4) will then use the identifier to set up a user profile (5). This will involve, amongst others, selecting a user name and a password. An email address or mobile telephone number can conveniently be used as the former and a PIN code as the latter. Under certain circumstances, it will be convenient to have the first (12) and second (40) kiosks combined as a single station or vending machine. The station may also incorporate a facility to receive payment for cup credits from the consumer (4). The station will be enabled to receive cash, credit/debit cards or other means of payment, such as virtual credit card payments.

The payment facility (3) is connected to an electronic platform supported by the server (35) which manages user profiles and profile credits.

The consumer has an NFC enabled card (39) linked to the user profile (5).

In addition or as an alternative to the payment station option mentioned above, once a user profile (5) has been set up, a payment facility (3) will be provided online available through an internet connection and accessed through the user profile (5). The user profile (5) may be made available by logging in through a portal on an internet webpage or it may be supported by a mobile telephone application involving suitable software downloaded to the consumer/user's mobile telephone or other mobile communication device. Even though not NFC enabled, the telephone or device will provide an interface to access the user profile. The interface will in turn provide another option for the facility to receive a payment from a consumer and load that payment against its user profile.

### Interaction with beverage dispensers and implementation other features

A plurality of cups (11) having distinct tags (NFC chips or the RFID version) can thus be linked to a single user profile (5).

The filling stations (6) of the dispenser (2) are suited for rapid filling of beer into a cup. The volumetric valves (7a) will be provided to dispense 500 ml of beer. To this end, the stations (6) are fitted with equipment suited for bottom filling of the cups to avoid excessive beer-head formation on rapid filling. This will generally include automated filling nozzles (7) which can fill a cup (11) from the bottom.

One option is for retractable nozzles to descend into the cups for filling. In the current embodiment, however, the cups (11) include filling valves (41) at or adjacent bottom ends and the nozzles (7) of the filling stations (6) will penetrate the cups (11) through these valves (41). The nozzles (7) will also be retractable and automated.

In this preferred example, the valves (41) each comprise a resiliently flexible membrane (42) of suitable thickness with a cross or "+" shaped, centrally located perforation. A retaining ring (43) secures the membrane (42) over a nozzle inlet opening (44). The ring (43) is an interference fit into an annular recess countersunk around the opening (44).

Alternatively, the nozzles could be supported in a fixed position on the filling stations. In that case, the cups will be manually fitted onto the nozzles when seated.

The computer processor (9) is connected to and forms part of a profile credit receipt authentication circuit (45) including at least one reader (37) provided in the immediate vicinity of the beverage dispensing machine (2). The processor (9) is also connected to the electronic platform supported by the remote server (36) which manages user profiles (5) and profile credits.

The system (1) operates on the basis of dispensing a cup unit of a beverage into each of a plurality of cups (11) respectively having an electronically detectable, unique identification tag (17) on transmission to the credit receipt reader or readers (37) of a request to redeem a cup credit.

The request to redeem a cup credit involves presenting to the processor (9) via the profile credit receipt circuit (45), a cup (11) having the tag (17) authorised to redeem a credit loaded against the profile (5).

Before a request to redeem a cup credit will be processed, an authorisation interaction (xy) must take place between the NFC device (32 or 39) linked to a particular user profile (5) and cup mounted identification tags (17). The authorisation interaction (xy) must be recognized by the system (1) to effect authorisation of cups (11) to receive a beverage unit.

Once the cup or cups (11) are filled, the system (1) deducts a commensurate number of credits from the user profile (5) to which their tags (17) were linked.

The authorisation interaction (xy) is initiated as a credit transfer instruction (x) executed by the NFC device (32 or 39).

In accordance with the first embodiment of the invention illustrated in Figure 5 the authorisation interaction (xy) takes place through series communications (x) and (y). A first interaction (x) takes place between the NFC enabled device, which is a mobile telephone (32), and the cup mounted tag, which is an NFC chip (17), and provides the credit transfer instruction (x). The first interaction (x) is a communication provided as a message initiated by the NFC device (32) and transmitted to a cup mounted tag (17). A second interaction (y) then takes place between the cup mounted tag (17) and the credit receipt reader (37a or 37b) which provides the request to redeem a cup credit (y). The second interaction (y) is a communication provided as a message initiated by the tag (17) of the cup (11) interacting with a reader (37) in the credit receipt circuit (45).

In this version of the invention, the cup mounted tag (17) comprises an NFC chip and the first interaction (x) takes place by tapping the cup (11) with the NFC device (32) to transfer at least one credit to the NFC chip (17) of the cup.

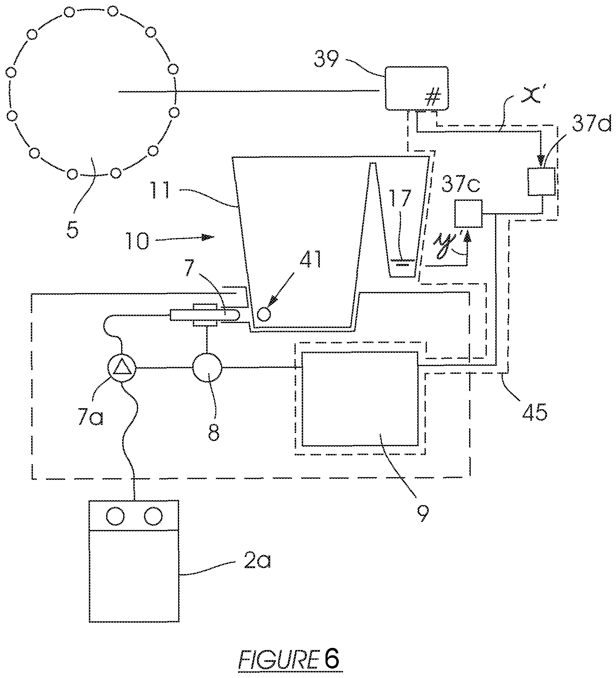

In accordance with the example
illustrated in Figure 6 the authorisation interaction (xy) take places through parallel communications (x') and (y'). In this version, the credit receipt reader (45) comprises a first reader (37c) to identify a cup mounted tag (17), which may be an RFID tag, and a second reader (37d) to receive the credit transfer instruction (y') from the NFC device, which may be a card (39) with an NFC chip instead of an NFC enabled mobile phone. A first communication (x') is provided as a message from the cup mounted tag (17) transmitted to the first reader (37c), which provides the request to redeem a cup credit (x'). A second communication (y') is provided as a message between the NFC device (39) and the second reader (37d), which constitutes the credit transfer instruction (y').

In this example the at least one cup filling station (6) of the beverage dispensing machine (2) includes as the first reader, an electronic tag reader (37c) and as a second reader, an NFC device interrogator (37d). Both readers are connected to the computer processor (9) via the credit receipt circuit (45). The NFC device (39), which represents a user profile (5), and a cup mounted tag (17) linked to the user profile (5) provide a combination of predefined parameters unique to that user profile (5) and to be matched through the credit receipt circuit (45) of the beverage dispensing machine (2).

The system (1) is thus programmed to:
a) dispense a cup unit of a beverage into each of a plurality of cups respectively having an electronically detectable, unique identification tag on transmission to the credit receipt reader of a request to redeem a cup credit;
b) recognize an authorisation interaction between the NFC device linked to a particular user profile and cup mounted identification tags to effect authorisation of cups to receive a beverage unit before processing the request to redeem a cup credit; and
c) to deduct a commensurate number of credits from the user profile on dispensing of authorised beverage units.

The system (1) accordingly provides for automated payment for filling of a docked cup on actuation of the NFC credit receipt circuit (45) by the consumer NFC device (32 or 39) and can fill several cups (11) independently on receipt and recognition of the required defined parameters of a user profile (5).

Before an authorisation interaction (xy) can take place between the NFC device of a particular user profile and any particular cup mounted tag, the tag (17) must first be linked to the user profile (5).

The linking of a cup mounted tag may take place by identifying the tag and associating it with a particular user profile or it may take place through a credit transfer instruction with a user NFC device which is connected to the user profile. Linking of cup tags to a user profile may also be effected by the vending machine when a cup is initially retrieved. In other words, the user profile is identified to the vending machine before a cup is dispensed and the connection with that profile is established.

The option of transferring credits to a cup that is not linked to a particular user profile will also be available through credit transfer instruction by a user NFC device interaction with that cup. (This will be subject to the reuse limitations of the cup, discussed below - a cup mounted tag will preferably not accept more refill credits than the remaining uses or refills that are available to that cup to prevent leaking of the valve.)

The linking can also be effected by using a paired combination of readers; that is, one reader on a filling station to detect the cup tag (which is also a request to redeem a cup credit) and a second reader to receive the credit transfer instruction from the NFC device.

The interface on the mobile telephone (in both the first and second embodiment of the invention) through which the user profile is accessed will preferably provide beverage ordering options for a predefined number of cup units. The ordering information relating to the number of cup units required for refill, as selected by option on the interface, can be communicated to the processor for filling of docked cups having tags linked to the user profile. In that case, the order will be processed by the system once the relevant cups are docked and the request to redeem a cup credit is received and the authorisation interaction recognised.

Such communication between a user mobile device linked to the profile and the processor need not take place through the credit receipt circuit but can instead be communicated through the Wi-Fi connection. The processor is thus notified that a particular user profile seeks to redeem a certain amount of credits and will be in a queue at the dispensing machine. The order is processed when the information required by the credit receipt circuit is received.

The pre-order facility of the profile will communicate to the system a current demand for a particular beverage. This may be different brands of beer or soft drinks. With this information, the necessary stock can be made available at the relevant dispensing machines based on the various locations of the machines within the stadium.

The invention will in terms of one preferred embodiment be implemented with respect to cups that are reusable. (This is not common practice where beer is served at events of the kind described.) Where the cups have bottom filling valves, they will be of limited reuse. Penetration of the valves by the filling nozzle tends to damage the valve closure. In this example, the cups will be reused for five fills only.

The processor of the beverage dispenser is programmed to count uses of individual cups identified by their tags. On presentation of a cup after a predetermined number of uses the processor will provide a signal indicating replacement is required. The signal can be provided through any convenient signal output mechanism. The signal mechanism may include a display screen on the dispenser or a simple arrangement of lights (a green light if the cup can be refilled and a red light if the cup has reached the end of its uses and needs to be replaced), for example.

In a development of this aspect of the invention, the processor will be programmed to withhold filling of a docked cup after a predetermined number of uses of the cup. A signal is issued for an operator of the beverage dispenser to remove the cup from the dock and insert a replacement cup with a new tag. The processor then automatically updates the relevant user profile by linking the new tag of the replacement cup. The processor will then also deactivate the tag of the replaced cup from the user profile.

Where the cups are not to be automatically replaced by an operator of the dispenser, the system will provide a signal to the consumer providing notification that a replacement cup should be collected from the first kiosk. The signal could be communicated through the mobile phone interface accessing the user profile but could alternatively, or in addition, be provided as an SMS to a mobile telephone number linked to the user profile.

It is also anticipated that when a cup is initially retrieved from the first kiosk, the consumer will be provided with a payment option up to five refills per cup retrieved - based on the selected number of a five use per cup maximum. Various payment and cup options will be available. For example, a consumer may want three cups each with three refills available. A signal or message will be sent to the consumer when the last refill or credit is retrieved. At that stage the consumer can go back to the first kiosk, retrieve another cup with the required number of further credits. The first kiosk may provide various payment options as already mentioned. However, once a consumer has set up a user profile, the payment can be made through a mobile device and the cups retrieved from the kiosk using the consumer NFC device (card or mobile telephone).

The beverage service system provides for the situation where a user will pour his own beverage as well as where the beer dispensers will be manned by operators behind a bar counter who will pour the beer for the consumer, or at least, place the cup in the filling station and return it once it has been filled.

Where beverage dispenser operators are to be used behind a bar counter configuration, the invention also provides for each cup filling station of the beverage dispensing machine include a display panel linked through the processor to the first credit receipt readers. The display panels will serve to indicate which filling stations have cups linked to a user profile at a particular second credit receipt reader provided on or adjacent a countertop for queues of consumers to access. The display panels will be arranged for beverage dispensing machine operators behind the counter to match filled cups for return to customers at the respective second credit receipt readers.

A machine to rinse and/or clean cups will also be provided. The cup will be inverted and pressed down over a cleaning fluid nozzle. A pressure sensitive plate surrounding the nozzle will activate the mechanism. Cleaning liquid will spray out of the nozzle and disinfect the inside of the cup.

A large format display will be used at kiosks or vending machines and/or at the beverage dispensers, which will provide directions for cup activation, profile set-up, payment options and cup cleaning.

The system allows for efficient service combined with quick dispensing and avoids money counting at the beverage dispensers.

In addition to the prepaid pouring of a beverage, the system provides data relating to dispensing of beverage per tagged and identified cup. This provides for cashless beverage ordering counters with the possibility of self-service facilities and a comprehensive record of stock usage.

The number of cups dispensed and credits purchased will also give an indication of the expected demand for a beverage.

The user profiles enable a communication channel with the users. This may be used to provide vouchers or free credits after a given number of purchasers. Messages regarding specials relating to the beverage or to other products or merchandise can also be sent to the user's mobile phone.

Once a user profile has been registered, a user can provide a seat number in the stadium for a given event. A profile interface will be able to guide the user to the closest cup vending machine and beverage dispensing point. The details of credit purchases against seat numbers will enable volume planning and distribution of beverage kegs to relevant dispensing points.

In a development of the invention, a user will be able to order a beverage from a particular seat and have it delivered. Such a service could be provided to only a limited area, where seats are paid for at a premium, for example, or in privately owned boxes.

A person skilled in the art will appreciate that a number of variations may be made to the features of the described embodiments without departing from the scope of the invention. The invention in its wider aspect may also as an alternative, employ Bluetooth Low Energy technology for communication or transfer of signals/information, for example.

## Claims

1. A system (1) for the service of a beverage to consumers comprising:
- a facility (3) to receive a payment (3a) from a consumer (4) and load the payment, as a credit for cup units of a beverage, against a user profile (5);
- the facility (3) connected to an electronic platform (35, 36) which manages user profiles (5) and profile credits;
- the consumer having a near field communication (NFC) enabled device (32, 39) linked to the user profile;
- a beverage dispensing machine (2) including at least one cup filling station (6) with a cup filling nozzle (7) having an actuator (8) connected to a computer processor (9);
- the processor (9) connected to a profile credit receipt circuit (45) including at least one reader (37) provided in the immediate vicinity of the beverage dispensing machine (2);
- the processor (9) also connected to the electronic platform (35, 36);
- the system programmed to:
a) dispense a cup unit of a beverage into each of a plurality of cups (11) respectively having an electronically detectable, unique identification tag (17) on transmission to the at least one credit receipt reader (37) of a request to redeem a cup credit;
b) recognize an authorisation interaction between the NFC device (32, 39) linked to a particular user profile (5) and at least one cup mounted identification tag (17) to effect authorisation of at least one cup (11) to receive a beverage unit before processing the request to redeem a cup credit; and
c) to deduct a commensurate number of credits from the user profile (5) on dispensing of authorised beverage units;
- wherein the cup mounted identification tag (17) must be linked to a particular user profile (5) before an authorisation interaction can take place with respect to the cup mounted identification tag (17);
- wherein the request to redeem a cup credit involves presenting to the processor (9) via the profile credit receipt circuit (45), a cup (11) having the tag (17) authorised to redeem a credit loaded against the profile (5), such that the request to redeem a cup credit is effected by the transfer of data to the at least one reader (37) from the cup mounted tag (17); and
- wherein the authorisation interaction is initiated as a credit transfer instruction executed by the NFC device (32, 39) linked to the user profile (5) and effected by the transfer of data from the NFC device (32, 39) linked to the user profile (5),
- wherein:
the cup mounted tag (17) includes an NFC readable circuit, and the authorisation interaction takes place through series communications from the NFC device (32) through a cup mounted tag (17) and to the credit receipt circuit with:
a first interaction (x) between the NFC device (32) and the cup mounted tag (17) linked to the same user profile which provides the credit transfer instruction, wherein the first interaction takes place by tapping the cup (11) with the NFC device (32) to transfer at least one credit to the NFC readable circuit (17) of the cup.; and
a second interaction (y) between the cup mounted tag (17) and the credit receipt reader (37a, 37b) which provides the request to redeem a cup credit.

2. A system as claimed in claim 1 in which a plurality of cups (11) having distinct tags (17) are linkable to a single user profile (5).

3. A system as claimed in claim 1 in which the payment facility (3) is provided online and accessed through the user profile (5).

4. A system as claimed in claim 1 in which the beverage dispensing machine (2) includes a plurality of filling stations (6) each configured to receive a cup (11) and enabled to fill several cups independently with a filling nozzle for bottom filling of cups having bottom filling valves for penetration by the nozzle.

5. A system as claimed in claim 1 in which the cup has a stackable handle (13) comprising an internal socket (14) extending from an operatively upper end and an external spigot (15) from an operatively lower end (16) provided as a complementary fit to a handle socket of another cup and the tag (17) is secured to an end wall (18) at or adjacent the operatively lower end (16) of the handle (13).

6. A system as claimed in claim 4 in which each filling station (6) of the beverage dispensing machine includes a dock (10) configured to receive a bottom end of a cup (11) and for the system to effect automated filling of a docked cup by processing an order once the request to redeem a cup credit is received and the authorisation interaction recognised.

7. A system as claimed in claim 1 in which the cups (11) are of limited reuse and for the processor (9) of the beverage dispenser to count uses of individual cups (11) identified by their tags (17) and provide a signal on presentation of a cup after a predetermined number of uses indicating replacement is required; in which the processor will withhold filling of a docked cup (11) after a predetermined number of uses, issue a signal for a beverage dispenser operator to remove the cup from the dock and insert a replacement cup with a new tag; and in which the processor (9) will update the user profile (5) by automatically linking a new tag (17) of the replacement cup to the user profile and deactivate the tag of the replaced cup from the user profile.

8. A system as claimed in claim 1 in which the NFC device is provided as an NFC enabled mobile telephone (32) or a card (39) with an NFC chip.

9. A system as claimed in claim 1 in which a consumer mobile communication device (32) provides an interface to access the user profile (5) and for the interface to provide beverage ordering options for a predefined number of cup units; in which ordering information relating to the number of cup units required for refill, as selected by option on the interface, is communicated to the processor (9) for filling of docked cups having tags (17) linked to the user profile; and in which the user profile interface (33, 36) provides the facility (3) to receive a payment from the consumer and load that payment against the user profile (5).

## Patentansprüche

1. System (1) für die Ausgabe eines Getränks an Verbraucher, umfassend:
- Einrichtung (3) zum Empfangen einer Zahlung (3a) von einem Verbraucher (4) und Laden der Zahlung als Guthaben für Bechereinheiten eines Getränks, gegen ein Benutzerprofil (5);
- die Einrichtung (3), verbunden mit einer elektronischen Plattform (35, 36), die Benutzerprofile (5) und Profilguthaben verwaltet;
- wobei der Verbraucher mit einer Vorrichtung mit Nahfeldkommunikationsfähigkeit (NFC) (32, 39) ausgestattet ist, die mit dem Benutzerprofil verknüpft ist;
- Getränkeausgabevorrichtung (2) mit mindestens einer Becherbefüllstation (6) mit einer Becherbefülldüse (7) mit einem Stellglied (8), das mit einem Computerprozessor (9) verbunden ist;
- den Prozessor (9), verbunden mit einem Profil-Guthabenempfangsschaltkreis (45), der mindestens eine Lesevorrichtung (37) beinhaltet, die in unmittelbarer Nähe zur Getränkeausgabevorrichtung (2) bereitgestellt ist;
- den Prozessor (9), ebenfalls mit der elektronischen Plattform (35, 36) verbunden;
- das System, das für Folgendes programmiert ist:
a) Ausgeben einer Bechereinheit eines Getränks in jeden von einer Vielzahl von Bechern (11) mit jeweils einem elektronisch erfassbaren, eindeutigen Identifikations-Tag (17) bei der Übertragung einer Anforderung zur Einlösung eines Becherguthabens an die mindestens eine Guthabenempfangslesevorrichtung (37);
b) Erkennen einer Autorisierungsinteraktion zwischen der NFC-Vorrichtung (32, 39), die mit einem bestimmten Benutzerprofil (5) verknüpft ist, und mindestens einem am Becher angebrachten Identifikations-Tag (17), um die Autorisierung von mindestens einem Becher (11) zum Empfangen einer Getränkeeinheit vor der Bearbeitung der Anforderung nach Einlösung eines Becherguthabens zu bewirken; und
c) Abziehen einer entsprechenden Menge von Guthaben vom Benutzerprofil (5) bei der Ausgabe von autorisierten Getränkeeinheiten;
- wobei das am Becher angebrachte Identifikations-Tag (17) mit einem bestimmten Benutzerprofil (5) verknüpft werden muss, bevor eine Autorisierungsinteraktion in Bezug auf das am Becher angebrachte Identifikations-Tag (17) stattfinden kann;
- wobei die Anforderung, ein Becherguthaben einzulösen, beinhaltet, dem Prozessor (9) über den Profil-Guthabenempfangsschaltkreis (45) einen Becher (11) mit dem Tag (17) mit der Berechtigung vorzulegen, ein gegen das Profil (5) geladenes Guthaben einzulösen, sodass die Anforderung, ein Becherguthaben einzulösen, durch die Übertragung von Daten an die mindestens eine Lesevorrichtung (37) vom am Becher angebrachten Tag (17) bewirkt wird; und
- wobei die Autorisierungsinteraktion als eine Anweisung zur Guthabenübertragung eingeleitet wird, die von der NFC-Vorrichtung (32, 39) ausgeführt wird, die mit dem Benutzerprofil (5) verknüpft ist und durch die Übertragung von Daten von der NFC-Vorrichtung (32, 39), die mit dem Benutzerprofil (5) verknüpft ist, bewirkt wird,
- wobei:
das am Becher angebrachte Tag (17) einen NFC-lesbaren Schaltkreis beinhaltet, und die Autorisierungsinteraktion durch serielle Kommunikation von der NFC-Vorrichtung (32) über ein am Becher angebrachtes Tag (17) und zum Guthabenempfangsschaltkreis stattfindet durch:
erste Interaktion (x) zwischen der NFC-Vorrichtung (32) und dem am Becher angebrachten Tag (17), das mit dem gleichen Benutzerprofil verknüpft ist, das die Anweisung zur Guthabenübertragung bereitstellt, wobei die erste Interaktion stattfindet, indem der Becher (11) von der NFC-Vorrichtung (32) angetippt wird, um mindestens ein Guthaben an den NFC-lesbaren Schaltkreis (17) des Bechers zu übertragen; und
zweite Interaktion (y) zwischen dem am Becher angebrachten Tag (17) und der Guthabenempfangslesevorrichtung (37a, 37b), die die Anforderung zum Einlösen eines Becherguthabens bereitstellt.

2. System nach Anspruch 1, bei dem eine Vielzahl von Bechern (11) mit verschiedenen Tags (17) mit einem einzelnen Benutzerprofil (5) verknüpfbar sind.

3. System nach Anspruch 1, bei dem die Zahlungseinrichtung (3) online bereitgestellt und über das Benutzerprofil (5) aufgerufen wird.

4. System nach Anspruch 1, bei dem die Getränkeausgabevorrichtung (2) eine Vielzahl von Füllstationen (6) beinhaltet, die jeweils dafür ausgelegt sind, einen Becher (11) aufzunehmen und es zu ermöglichen, mehrere Becher unabhängig voneinander mit einer Fülldüse zur Bodenbefüllung von Bechern, die mit Bodenfüllventilen zum Eindringen durch die Düse ausgestattet sind, zu befüllen.

5. System nach Anspruch 1, bei dem der Becher einen stapelbaren Griff (13) aufweist, der eine innere Hülse (14), die sich von einem im Betrieb oberen Ende und einem äußeren Zapfen (15) von einem im Betrieb unteren Ende (16) erstreckt, umfasst, die als komplementäre Aufnahme für eine Griffhülse eines anderen Bechers bereitgestellt ist, und das Tag (17) an einer Endwandung (18) am oder angrenzend an das im Betrieb untere Ende (16) des Griffs (13) befestigt ist.

6. System nach Anspruch 4, bei dem jede Füllstation (6) der Getränkeausgabevorrichtung ein Dock (10) beinhaltet, das dafür ausgelegt ist, ein unteres Ende eines Bechers (11) aufzunehmen und für das System das automatisierte Befüllen eines angedockten Bechers durch Bearbeiten einer Bestellung zu bewirken, sobald die Anforderung zum Einlösen eines Becherguthabens empfangen und die Autorisierungsinteraktion erkannt wurde.

7. System nach Anspruch 1, bei dem die Becher (11) begrenzt wiederverwendbar sind und der Prozessor (9) des Getränkeautomaten die Verwendungen einzelner Becher (11), die durch ihre Tags (17) identifiziert sind, zählt und bei Vorlage eines Bechers nach einer vorbestimmten Anzahl von Verwendungen ein Signal bereitstellt, das angibt, dass ein Austausch erforderlich ist; bei dem der Prozessor das Befüllen eines angedockten Bechers (11) nach einer vorbestimmten Anzahl von Verwendungen zurückhält, ein Signal für einen Bediener des Getränkeautomaten ausgibt, dass der Becher aus dem Dock zu entfernen und ein Ersatzbecher mit einem neuen Tag einzusetzen ist; und bei dem der Prozessor (9) das Benutzerprofil (5) aktualisiert, indem er automatisch ein neues Tag (17) des Ersatzbechers mit dem Benutzerprofil verknüpft und das Tag des ersetzten Bechers im Benutzerprofil deaktiviert.

8. System nach Anspruch 1, bei dem die NFC-Vorrichtung als NFC-fähiges Mobiltelefon (32) oder als Karte (39) mit einem NFC-Chip bereitgestellt wird.

9. System nach Anspruch 1, bei dem eine mobile Verbraucherkommunikationsvorrichtung (32) eine Schnittstelle zum Zugriff auf das Benutzerprofil (5) und für die Schnittstelle zum Bereitstellen von Getränkebestelloptionen für eine vordefinierte Anzahl von Bechereinheiten bereitstellt; bei dem Bestellinformationen bezüglich der Anzahl der zum Nachfüllen erforderlichen Bechereinheiten, wie sie durch eine Option auf der Schnittstelle ausgewählt sind, dem Prozessor (9) zum Befüllen von angedockten Bechern mit Tags (17), die mit dem Benutzerprofil verknüpft sind, übermittelt werden; und bei dem die Benutzerprofilschnittstelle (33, 36) die Einrichtung (3) zum Empfangen einer Zahlung vom Verbraucher und Laden dieser Zahlung gegen das Benutzerprofil (5) bereitstellt.

## Revendications

1. Système (1) pour servir une boisson à des consommateurs comprenant :
- un moyen (3) pour recevoir un paiement (3a) d'un consommateur (4) et charger le paiement, en crédit pour des unités de gobelet d'une boisson, en fonction d'un profil d'utilisateur (5) ;
- le moyen (3) étant connecté à une plateforme électronique (35, 36) qui gère des profils d'utilisateur (5) et des crédits de profil ;
- le consommateur ayant un dispositif activé par communication en champ proche (NFC) (32, 39) lié au profil d'utilisateur ;
- une machine de distribution de boisson (2) incluant au moins une station de remplissage de gobelet (6) avec un bec de remplissage de gobelet (7) ayant un actionneur (8) connecté à un processeur d'ordinateur (9) ;
- le processeur (9) étant connecté à un circuit de réception de crédit de profil (45) incluant au moins un lecteur (37) prévu à proximité immédiate de la machine de distribution de boisson (2) ;
- le processeur (9) étant également connecté à la plateforme électronique (35, 36) ;
- le système étant programmé pour :
a) distribuer une unité de gobelet d'une boisson dans chacun d'une pluralité de gobelets (11) ayant respectivement une étiquette d'identification unique détectable électroniquement (17) lors d'une transmission à l'au moins un lecteur de réception de crédit (37) d'une demande d'encaissement d'un crédit de gobelet ;
b) reconnaître une interaction d'autorisation entre le dispositif NFC (32, 39) lié à un profil d'utilisateur (5) particulier et une étiquette d'identification montée sur le gobelet (17) pour effectuer une autorisation d'au moins un gobelet (11) pour recevoir une unité de boisson avant de traiter la demande d'encaissement d'un crédit de gobelet ; et
c) déduire un nombre de crédits proportionnel du profil d'utilisateur (5) lors d'une distribution d'unités de boisson autorisées ;
- dans lequel l'étiquette d'identification montée sur le gobelet (17) doit être liée à un profil d'utilisateur particulier (5) avant qu'une interaction d'autorisation puisse avoir lieu par rapport à l'étiquette d'identification montée sur le gobelet (17) ;
- dans lequel la demande d'encaissement d'un crédit de gobelet implique la présentation au processeur (9) via le circuit de réception de crédit de profil (45), d'un gobelet (11) ayant l'étiquette (17) autorisée à encaisser un crédit chargé en fonction du profil (5), de sorte que la demande d'encaissement d'un crédit de gobelet soit effectuée par le transfert de données à l'au moins un lecteur (37) depuis l'étiquette montée sur le gobelet (17) ; et
- dans lequel l'interaction d'autorisation est lancée en tant qu'instruction de transfert de crédit exécutée par le dispositif NFC (32, 39) lié au profil d'utilisateur (5) et effectuée par le transfert de données depuis le dispositif NFC (32, 39) lié au profil d'utilisateur (5),
- dans lequel :
l'étiquette montée sur le gobelet (17) inclut un circuit lisible par NFC, et l'interaction d'autorisation a lieu par le biais de communications en série depuis le dispositif NFC (32) par le biais d'une étiquette montée sur le gobelet (17) et jusqu'au circuit de réception de crédit avec :
une première interaction (x) entre le dispositif NFC (32) et l'étiquette montée sur le gobelet (17) liée au même profil d'utilisateur qui fournit l'instruction de transfert de crédit, dans lequel la première interaction a lieu en touchant le gobelet (11) avec le dispositif NFC (32) pour transférer au moins un crédit au circuit lisible par NFC (17) du gobelet ; et
une seconde interaction (y) entre l'étiquette montée sur le gobelet (17) et le lecteur de réception de crédit (37a, 37b) qui fournit la demande d'encaissement d'un crédit de gobelet.

2. Système selon la revendication 1, dans lequel une pluralité de gobelets (11) ayant des étiquettes distinctes (17) peut être liée à un profil d'utilisateur unique (5).

3. Système selon la revendication 1, dans lequel le moyen de paiement (3) est prévu en ligne et est accessible par le biais du profil d'utilisateur (5).

4. Système selon la revendication 1, dans lequel la machine de distribution de boisson (2) inclut une pluralité de stations de remplissage (6) configurées chacune pour recevoir un gobelet (11) et activées pour remplir plusieurs gobelets indépendamment avec un bec de remplissage pour un remplissage par le fond de gobelets ayant des vannes de remplissage par le fond pour une pénétration par le bec.

5. Système selon la revendication 1, dans lequel le gobelet comporte une anse empilable (13) comprenant une cavité interne (14) s'étendant depuis une extrémité opérationnellement supérieure et un robinet externe (15) depuis une extrémité opérationnellement inférieure (16) prévue en tant que pièce complémentaire d'une cavité d'anse d'un autre gobelet et l'étiquette (17) est assujettie à une paroi d'extrémité (18) au niveau de ou adjacente à l'extrémité opérationnellement inférieure (16) de l'anse (13).

6. Système selon la revendication 4, dans lequel chaque station de remplissage (6) de la machine de distribution de boisson inclut un socle d'accueil (10) configuré pour recevoir une extrémité de fond d'un gobelet (11) et pour que le système effectue un remplissage automatique d'un gobelet sur socle d'accueil en traitant une commande une fois que la demande d'encaissement d'un crédit de gobelet est reçue et l'interaction d'autorisation reconnue.

7. Système selon la revendication 1, dans lequel les gobelets (11) ont une réutilisation limitée et pour que le processeur (9) du distributeur de boisson compte des utilisations de gobelets individuels (11) identifiés par leurs étiquettes (17) et fournisse un signal lors d'une présentation d'un gobelet après un nombre d'utilisations prédéterminé indiquant qu'un remplacement est demandé ; dans lequel le processeur refusera de remplir un gobelet sur socle d'accueil (11) après un nombre d'utilisations prédéterminé, émettra un signal pour qu'un opérateur de distributeur de boisson enlève le gobelet du socle d'accueil et insère un gobelet de remplacement avec une nouvelle étiquette ; et dans lequel le processeur (9) mettra à jour le profil d'utilisateur (5) en liant automatiquement une nouvelle étiquette (17) du gobelet de remplacement au profil d'utilisateur et désactivera l'étiquette du gobelet remplacé du profil d'utilisateur.

8. Système selon la revendication 1, dans lequel le dispositif NFC est fourni sous forme de téléphone mobile activé par NFC (32) ou de carte (39) avec une puce NFC.

9. Système selon la revendication 1, dans lequel un dispositif de communication mobile de consommateur (32) fournit une interface pour accéder au profil d'utilisateur (5) et pour que l'interface fournisse des options de commande de boisson pour un nombre d'unités de gobelet prédéfini ; dans lequel des informations de commande relatives au nombre d'unités de gobelet demandant d'être re-remplies, sélectionnées par une option sur l'interface, sont communiquées au processeur (9) pour remplir des gobelets sur socle d'accueil ayant des étiquettes (17) liées au profil d'utilisateur ; et dans lequel l'interface de profil d'utilisateur (33, 36) fournit le moyen (3) pour recevoir un paiement du consommateur et charger ce paiement en fonction du profil d'utilisateur (5).
